# EUROPÄISCHE PATENTSCHRIFT

(11) **EP 2 781 532 B1**
(45) Veröffentlichungstag und Bekanntmachung des Hinweises auf die Patenterteilung: **03.05.2017**
(21) Anmeldenummer: 14161035.2
(22) Anmeldetag: 21.03.2014
(51) Int. Cl.: C08G 63/91, C09J 167/04

(54) **KLEBSTOFFZUSAMMENSETZUNG AUF BASIS VON MODIFIZIERTEM POLYLACTID, VERFAHREN ZU DEREN HERSTELLUNG SOWIE VERWENDUNG DER KLEBSTOFFZUSAMMENSETZUNG**
ADHESIVE COMPOSITION BASED ON MODIFIED POLYLACTIDE, METHOD FOR ITS PRODUCTION AND USE OF THE ADHESIVE COMPOSITION
COMPOSITION, PROCÉDÉ DE FABRICATION ET UTILISATION D'UN ADHÉSIF À BASE DE POLYLACTIDE MODIFIÉ

(30) Priorität: 22.03.2013 DE 102013205144
(43) Veröffentlichungstag der Anmeldung: 24.09.2014
(73) Patentinhaber: Henkel AG & Co. KGaA, 40589 Düsseldorf (DE)
(72) Erfinder: Timm, Christoph, 79539 Lörrach (DE)

(56) Entgegenhaltungen:
- WO-A1-94/10257
- US-A- 5 952 405
- DATABASE WPI Week 199404 Thomson Scientific, London, GB; AN 1994-032009 XP002725654, & JP H05 339557 A (MITSUI TOATSU CHEM INC) 21. Dezember 1993 (1993-12-21)

## Beschreibung

Die Erfindung betrifft eine Klebstoffzusammensetzung auf Basis von modifiziertem Polylactid, ein Verfahren zur Herstellung der Klebstoffzusammensetzung sowie die Verwendung der Klebstoffzusammensetzung.
In den letzten Jahren ist es aufgrund der beschränkten Ressourcen an Erdöl und Kohle und der damit verbundenen starken Preisentwicklung dazu gekommen, dass man sich verstärkt darum bemüht, nachwachsende Rohstoffe zu verwenden. Aufgrund dieser Entwicklungen besteht großes Interesse daran, den petrochemischen Anteil in Kunststoffen zu reduzieren und vermehrt auf nachwachsende Rohstoffe zu setzen. Entsprechend gab es bislang bereits mehrfach Versuche, Klebstoffzusammensetzungen auf der Basis nachwachsender Rohstoffe zu entwickeln, bei denen der Anteil an nachwachsenden Rohstoffen besonders groß ist. Überdies nimmt die Bioabbaubarkeit von Klebstoffzusammensetzungen an Bedeutung zu.
So beschreibt die DE 692 03 713 T2 eine Schmelzklebstoffzusammensetzung, umfassend 20 bis 90 Gew.-% eines linearen Polyesters von 3-Hydroxybuttersäure und 3-Hydroxyvaleriansäure, der 9 bis 35 Mol-% der Hydroxyvaleratkomponente enthält, 10 bis 80 Gew.-% eines polaren Klebrigmachers (hierin auch als Tackifier bezeichnet), 0 bis 50 Gew.-% eines Weichmachers, 0 bis 30 Gew.-% eines Wachsverdünnungsmittels, 0 bis 3 Gew.-% eines Stabilisators und 0 bis 20 Gew.-% eines kompatiblen thermoplastischen Polymers.
Die EP 0 609 713 A1 beschreibt ein druckempfindliches Klebeband, umfassend einen Substratfilm und eine druckempfindliche Klebeschicht, die ein polymeres Elastomer enthält, das auf mindestens einer Oberfläche des Substratfilms gebildet ist, worin der Substratfilm und/oder das polymere Elastomer der druckempfindlichen Klebschicht mindestens 20 Gew.-%, basierend auf dem Gewicht des polymeren Elastomeren, eines bioabbaubaren hochmolekularen Materials enthält. Unter vielen genannten Materialien ist auch Polymilchsäure erwähnt.
Das US-Patent Nr. 5,252,646 offenbart eine Hotmelt-Klebstoffzusammensetzung, die 20 bis 98 Gew.-% eines Polylactid-homo- oder -copolymeren, wobei das Copolymer mindestens 20% der Lactid-Komponente enthält; 2 bis 80 Gew.-% eines polaren Tackifiers; 0 bis 50 Gew.-% eines Weichmachers; 0 bis 30 Gew.-% eines Wachsverdünnungsmittels und 0 bis 3 Gew.-% eines Stabilisators umfasst. Die Klebstoffzusammensetzungen sollen für eine Vielzahl von Anwendungen geeignet sein.

Hotmelt-Klebstoffe auf der Basis von nachwachsenden Rohstoffen, die biologisch abbaubar sind, sind überdies in der EP 0 741 177 A, EP 0 741 178 A, EP 1 236 753 A und in der US-Patentschrift Nr. 5,952,405 beschrieben.

Es hatte sich jedoch gezeigt, dass viele biologisch abbaubare Polymere wie Polyhydroxbutyrate, Polyhydroxyvalerate oder Polylactide in Hinblick auf die Klebeeigenschaften sowie die thermische und mechanische Stabilität und damit die Verarbeitbarkeit Nachteile aufweisen, die einen Einsatz auf unterschiedlichsten Gebieten verhindern.

In der DE 198 55 100 A1 wird daher ein Klebstoff vorgeschlagen, enthaltend Komponenten A und B, bei dem a) Komponente A mindestens einen Polyester mit einem Molekulargewicht (Mn) von mindestens 8.000 enthält und eine Gesamtschmelzenthalpie von höchstens 20 mJ/mg aufweist, und b) Komponente B mindestens einen Polyester mit einem Molekulargewicht (Mn) von weniger als 8000, insbesondere 1000 bis 6500, und einer Glasübergangstemperatur von höchstens 60°C, insbesondere von -25 bis 40°C, enthält, wobei der Klebstoff eine Schmelzviskosität von 500 bis 25.000 mPas und einen Erweichungspunkt von 70 bis 100°C aufweist. Der Klebstoff enthält insbesondere eine erste Säurekomponente ausgewählt aus o-Phthalsäure, Isophthalsäure oder Terephthalsäure, eine zweite Säurekomponente ausgewählt aus Adipinsäure und Sebacinsäure und als erste Alkoholkomponente ein Diol. Die Klebstoffe sollen insbesondere zur Verwendung bei der Herstellung von Verbundwerkstoffen wie Windeln, Binden und Krankenhaustextilien geeignet sein.

Die DE 694 22 053 T2 offenbart biologisch abbaubare bzw. kompostierbare Hot-Melt-Klebstoffe, die Polyester auf Basis von Milchsäure enthalten. Die biologisch abbaubaren bzw. kompostierbaren Schmelzklebstoff-Zusammensetzungen umfassen ein thermoplastisches Harz und eine klebrig machende Harz-Zusammensetzung, welche eine Polymilchsäurezusammensetzung umfasst, die bevorzugt einen möglichst hohen L-Milchsäureanteil aufweist (50-100 Mol-%).

Die JP H05 339557 A beschreibt eine Klebstoffzusammensetzung, umfassend ein klebrigmachendes, terminal über Ester- oder Urethangruppen modifiziertes Polylactid mit einem zahlengemittelten Molekulargewicht von weniger als 5000 g/mol, ein hochmolekulares modifiziertes Polylactid, gegebenenfalls einen weiteren Klebrigmacher und einen Weichmacher. Als Polylactid ist reines Poly-L-Lactid genannt.

Die US 5 952 405 A beschreibt eine Klebstoffzusammensetzung enthaltend ein Pfropfcopolymer, einen Klebrigmacher und einen Weichmacher, wobei im Pfropfcopolymer Poly-L-lactidsegmente über Estergruppen auf ein Acrylatpolymer aufgepfropft sind.

Die WO 00/35982 offenbart einen Polyurethan-Klebstoff aus Polyester-Polyolen und Polyisocyanaten, wobei das Polyester-Polyol auf mindestens einer Hydroxycarbonsäure mit 2 bis 5 C-Atomen basiert. Das Polyester-Polyol ist insbesondere ein Oligomer vorzugsweise der Milchsäure mit 2 primären und/oder sekundären OH-Endgruppen. Der Klebstoff kann insbesondere zweikomponentig sein und die Harzkomponente aus mindestens einem Polyesterpolyol auf der Basis von Hydroxycarbonsäure mit 2 bis 5 C-Atomen und die Härterkomponente aus einem Polyisocyanat, insbesondere aus einem Diisocyanat, bestehen.

Bislang gibt es keinen Haftschmelzklebstoff, der einen hohen Anteil an nachwachsenden Rohstoffen aufweist und zufriedenstellende Eigenschaften als Klebstoff, insbesondere als Etikettenklebstoff, aufweist. Im Bereich der Etikettenhaftklebstoffe ist lediglich ein acylatbasierter Klebstoff unter dem Namen BioTAK™ auf dem Markt, welcher jedoch nur als wässrige Dispersion auf das Etikettenmaterial gebracht werden kann.

Vor diesem Hintergrund war es Aufgabe der vorliegenden Erfindung, eine verbesserte Klebstoffzusammensetzung auf der Basis nachwachsender Rohstoffe, insbesondere auf der Basis von Polylactid, d.h. Polymilchsäure, bereitzustellen. Die Klebstoffzusammensetzung soll insbesondere als Hotmelt-Klebstoff eingesetzt werden können, wobei insbesondere auch die Verwendung als Hotmelt-Haftklebstoff möglich sein soll.

Die Lösung dieser Aufgabe wird nach dieser Erfindung erreicht durch eine Klebstoffzusammensetzung, ein Verfahren zu ihrer Herstellung sowie deren Verwendung mit den Merkmalen der entsprechenden unabhängigen Patentansprüche. Bevorzugte Ausführungsformen der erfindungsgemäßen Klebstoffzusammensetzung sind in den jeweiligen abhängigen Patentansprüchen aufgeführt. Bevorzugten Ausführungsformen der erfindungsgemäßen Klebstoffzusammensetzung entsprechen bevorzugte Ausführungsformen des erfindungsgemäßen Verfahrens und der Verwendung, auch wenn dies hierin nicht explizit festgestellt ist.

Gegenstand der Erfindung ist somit eine Klebstoffzusammensetzung, umfassend modifiziertes Polylactid, einen Weichmacher und einen Tackifier, wobei die Klebstoffzusammensetzung ein Polylactid-Derivat enthält, in dessen Polymerkette ein Anteil an D-2-Hydroxypropionsäuremonomereinheiten 5 bis 45 %, bevorzugt 10 bis 30 % und besonders bevorzugt 15 bis 25 %, und ein Anteil an L-2-Hydroxypropionsäuremonomereinheiten 55 bis 95 %, bevorzugt 70 bis 90 % und besonders bevorzugt 75 bis 85 %, bezogen auf die gesamte Menge an Hydroxypropionsäuremonomereinheiten, beträgt, und wobei die Polymerkette mindestens ein Segment mit 5 bis 100 Hydroxypropionsäuremonomereinheiten aufweist, an dessen Ende oder Enden über eine Estergruppe, Ethergruppe oder Urethangruppe gebunden ein organischer Rest R¹ mit mindestens 3 Kohlenstoffatomen angeordnet ist.

In einem "Segment" sind hierbei 2-Hydroxypropionsäureeinheiten direkt, d.h. ohne dazwischen angeordnete unterschiedliche Monomereinheiten, miteinander verbunden.

Das in der erfindungsgemäßen Klebstoffzusammensetzung eingesetzte Polylactidderivat leitet sich von einem Polylactid (auch als "Polymilchsäure" bezeichnet) ab, welches sich durch folgende Strukturformel darstellen lässt, in der "n" die Anzahl von jeweils drei 2-Hydroxpropionsäuremonomereinheiten bezeichnet:
Die Milchsäure, die hierin auch als 2-Hydroxypropionsäure bezeichnet wird, existiert in zwei verschiedenen isomeren Formen, nämlich als D-2-Hydroxypropionsäure und als L-2-

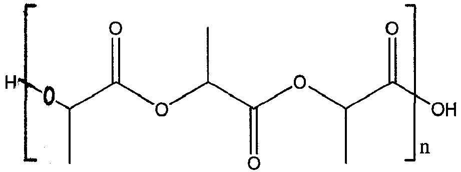

Hydroxypropionsäure. Erfindungsgemäß hat es sich gezeigt, dass eine besonders gute Klebstoffzusammensetzung erhalten wird, wenn im Polylactid-Derivat ein vorgenannter Überschuss an L-2-Hydroxypropionsäureemonomeren besteht.

Die zur Herstellung eingesetzten Milchsäuren, insbesondere deren optisch aktive Formen, können beispielsweise auf fermentativem Wege erzeugt werden. Homofermentative Lactobakterien generieren dabei ausschließlich L(+)-Milchsäure, heterofermentative Lactobakterien generieren entweder ein racemisches Gemisch oder auch D(-)-Milchsäure. Das Verhältnis zwischen L- und D-Milchsäure hängt von den Fermentationsparametern (Temperatur, pH-Wert, etc.) und dem Zustand der Bakterienkultur ab.

Es ist relativ schwierig, monomere Milchsäure zu erhalten, da sie bei Anreicherung in wässriger Lösung zur Selbstkondensation neigt und sich Oligomere bilden. Dieses Reaktionsverhalten zur Bildung linearer Polyester wird deshalb auch zur Synthese von Polylactid, d.h. Polymilchsäure, genutzt. Für die Herstellung von Polylactid sind prinzipiell zwei verschiedene Synthesewege einsetzbar. Einer davon ist die Polykondensation, bei der direkt aus Milchsäure ein Polymer erzeugt wird. Eine Alternative hierzu ist die ringöffnende Polymerisation von Dilactid. Dilactid wird durch destillative Dehydratisierung von Milchsäure mit anschließender zyklisierender Depolymerisation erhalten.

Ein Polylactid mit 5 bis 100 Hydroxypropionsäuremonomereinheiten kann auf unterschiedlichste Weise hergestellt werden. So kann ein Polylactid auf an sich bekannte Weise durch Polykondensation hergestellt werden, beispielsweise in einer Lösung, wobei ein Katalysator nicht erforderlich ist, aber vorteilhaft eingesetzt werden kann. Die Polymerisation von Milchsäure bei 200 °C für mehrere Stunden oder Tage führt beispielsweise ohne Katalysator ebenfalls zu einem geeigneten Polymer für die Klebstoffzusammensetzung. Dabei erfolgt die Polykondensation im Allgemeinen in der Schmelze, wobei das bei der Reaktion entstehende Wasser durch Anlegen eines Vakuums entfernt werden kann. Die Molmasse des erhaltenen Polylactids hängt von der Reaktionszeit ab.

Im Allgemeinen wird hierbei ein Polylactid mit vergleichsweise niedriger Molmasse, beispielsweise im Bereich von 1200 bis 2000 g/mol erhalten. Vorteilhaft wird daher ein Polylactid eingesetzt, bei dem durch Nachkondensation in der Schmelze bei einer Temperatur von vorteilhaft 160 bis 200°C, ganz besonders bevorzugt 170 bis 185°C, das Molekulargewicht erhöht wird.

Als Katalysatoren können beispielsweise Verbindungen von Zinn, Titan, Eisen, Zink und Zirkonium eingesetzt werden. Geeignete Katalysatoren sind beispielsweise Titan(IV)-isopropylat (Ti(iOPr)₄), Titan(IV)-butylat (Ti(OBu)₄), Zinkchlorid (ZnCl₂), Zinkacetylacetonat (Zn(acac)₂), Kupferacetylacetonat (Cu(acac)₂), Eisenacetylacetonat (Fe(acac)₃) und Zirkoniumacetylacetonat (Zr(acac)_{4'}). Zinn(II)-Katalysatoren weisen eine sehr hohe katalytische Aktivität auf und sind in organischen Lösungsmitteln gut löslich. Da sie zytotoxisch und schwierig aus den resultierenden Polymeren zu entfernen sind, können sie jedoch nicht bei Klebstoffzusammensetzungen für Lebensmittelverpackungen eingesetzt werden, vorzugsweise auch nicht bei solchen für Windeln und Inkontinenzeinlagen.

Als Katalysatoren können auch Protonensäuren (p-Toluolsulfonsäure, Schwefelsäure, Phosphorsäure), aber auch organische Verbindungen wie Bernsteinsäureanhydrid, Guanidindicarbonat und TBD (1,5,7-Triazabicyclo[4,4,0]dec-5-ene) eingesetzt werden.

Beispielsweise kann zur Herstellung von besonders geeigneten Polylactiden ein Polylactid mit einer Molmasse im Bereich von 1200 bis 2000 g/mol auf eine Temperatur im Bereich von 175 bis 185°C aufgeschmolzen werden und in Gegenwart eines Katalysators wie Zirkoniumacetylacetonat für 15 bis 24 h gehalten werden. Dadurch werden beispielsweise Polylactide mit Molmassen von über 7000 g/mol erhalten, die sich als Ausgangsmaterial für besonders geeignete Polylactid-Derivate eignen.

Im Polylactid-Derivat können weitere Monomereinheiten als Comonomereinheiten enthalten sein, insbesondere solche auf der Basis von anderen biologisch abbaubaren und nachwachsenden Rohstoffen erhaltene Comonomere wie z.B. 3-Hydroxybuttersäure oder 3-Hydroxyvaleriansäure.

Die Polylactid-Derivate können Comonomere mit funktionellen Gruppen enthalten, die eine weitere Modifikation des Polylactid-Derivates, beispielsweise durch nachfolgende Anlagerungsreaktionen erlauben. Beispielsweise könnten 0,5 bis 2 Gew.-% der Monomere in diesem Copolymer eine zusätzliche Chlorethyl- oder Chlorpropylgruppe enthalten, die durch Abspaltung eines Chloratoms nachfolgende Anlagerungsreaktionen ermöglicht. Funktionelle Gruppen in solchen Comonomeren könnten auch Hydroxy- oder Carboxylgruppen sein.

Das in der Klebstoffzusammensetzung eingesetzte Polylactid-Derivat hat vorzugsweise eine Glasübergangstemperatur im Bereich von -40 bis 65 °C und besonders bevorzugt im Bereich von - 20 bis 10°C. Die Polydispersität des Polylactid-Derivates liegt im Allgemeinen im Bereich von 1,5 und 4,5, vorzugsweise zwischen 1,5 und 3,5 und ganz besonders bevorzugt im Bereich von 1,5 bis 2,5. Die Säurezahl liegt zwischen 1 und 30 mg KOH/g vorzugsweise zwischen 1 und 20 mg KOH/g, und besonders bevorzugt zwischen 1 und 10 mg KOH/g. Das Molekulargewicht des Polylactid-Derivates liegt im Allgemeinen zwischen 3000 Da und 50000 Da, vorzugsweise zwischen 9000 und 20000 Da, besonders bevorzugt zwischen 9000 und 15000 Da.

In der erfindungsgemäßen Klebstoffzusammensetzung weist das Polylactid-Derivat in seiner Polymerkette vorzugsweise mindestens ein Segment mit 10 bis 50, mehr bevorzugt 15 bis 40 und ganz besonders bevorzugt 20 bis 35 Hydroxypropionsäuremonomereinheiten auf.

An einem oder beiden Enden des Segmentes ist über eine Estergruppe, Ethergruppe oder Urethangruppe gebunden ein organischer Rest R¹ mit mindestens 3 Kohlenstoffatomen angeordnet. Der organische Rest R¹ enthält vorzugsweise mindestens ein Heteroatom wie z.B. ein Sauerstoffatom oder ein Stickstoffatom, die vorteilhaft insbesondere in einer weiteren Esterbindung, Etherbindung oder Urethanbindung vorliegen können. Der organische Rest R¹ umfasst vorzugsweise ebenfalls ein Segment mit 5 bis 100 2-Hydroxypropansäureeinheiten.

Ein solches Polylactid-Derivat ist beispielsweise erhältlich durch Umsetzung eines Polylactids, insbesondere der endständigen Carboxylgruppen von zwei Polylactidketten, mit einem zweiwertigen Alkohol wie z.B. 1,2-Dibutanol, 1,4-Dibutanol oder 1,3-Dibutanol, sowie Polyethylenglykol oder Polypropylenglykol. Ein auf diese Weise erhaltenes Polylactid-Derivat weist Polymerketten mit endständigen Hydroxygruppen auf.

Zur Herstellung der in der erfindungsgemäßen Klebstoffzusammensetzung eingesetzten Polylactid-Derivate können durch Polykondensation von Milchsäure erhaltene Polylactide als solche eingesetzt werden, die als Endgruppen eine Hydroxygruppe bzw. eine Carboxylgruppe aufweisen. Es können jedoch vorteilhaft auch Polylactid-Derivate eingesetzt werden, bei denen die Endgruppen jeweils Hydroxygruppen oder Carboxylgruppen sind. Diese eignen sich besonders für weitere Derivatisierungen, die zu einer zusätzlichen vorteilhaften Verlängerung und Modifikation der Polymerkette führen.

Polylactid-Derivate, bei denen die Endgruppen jeweils Hydroxygruppen sind, können beispielsweise dadurch vorteilhaft hergestellt werden, dass die Polykondensation von Milchsäure in Gegenwart eines mindestens zweiwertigen Alkohols durchgeführt wird. Die auf diese Weise hergestellten OH-terminierten Milchsäuren, die vorzugsweise Oligomere sind, aber auch Polymere mit höheren Molmassen umfassen können, werden vorzugsweise mit Diisocyanaten umgesetzt, um für die Zwecke der Erfindung besonders bevorzugte Polylactid-Derivate zu erhalten.

Ganz besonders bevorzugt wird ein zweiwertiger Alkohol, d.h. ein Diol, mit drei bis acht Kohlenstoffatomen eingesetzt, insbesondere Diole mit 3 bis 8 Kohlenstoffatomen wie beispielsweise 1,4-Butandiol, 1,2-Butandiol, 2-Ethyl-1,3-Hexandiol und 1,2-Hexandiol. Diese Diole werden zur Herstellung der Polylactid-Derivate vorzugsweise in einer Menge von 2 bis 4 Mol-%, bezogen auf die Menge an Milchsäure, eingesetzt. Es können aber auch Triole wie Trimethylolpropan (TMP) oder höherwertige Alkohole eingesetzt werden, insbesondere wenn eine Vernetzung der Polymerketten erwünscht ist.

Erfindungsgemäß ist es besonders bevorzugt, wenn in einem Polylactid-Derivat mindestens eine dieser endständigen Hydroxygruppen durch einen, eine Urethangruppe enthaltenden organischen Rest R² ersetzt ist. Dies kann beispielsweise dadurch realisiert werden, dass ein Polylactid-Derivat mit endständigen Hydroxygruppen mit einer Isocyanatgruppen enthaltenden Verbindung umgesetzt wird. Es kann allerdings für die Umsetzung mit einer mindestens eine Isocyanatgruppe enthaltenden Verbindung auch ein Polylactid und/oder ein Polylactid-Derivat verwendet werden, das nur eine Hydroxygruppe aufweist.

In einer besonders bevorzugten Ausführungsform der erfindungsgemäßen Klebstoffzusammensetzung ist daher das Polylactidsäure-Derivat erhältlich durch Umsetzung eines Polylactids mit 5 bis 100 2-Hydroxypropionsäuremonomereinheiten, in dessen Polymerkette ein Anteil an D-2-Hydroxypropionsäuremonomereinheiten 5 bis 45 % und ein Anteil an L-2-Hydroxypropionsäuremonomereinheiten 55 bis 95 %, bezogen auf die gesamte Menge an Hydroxypropionsäuremonomereinheiten, beträgt, zunächst mit einem mindestens zweiwertigen Alkohol mit mindestens drei Kohlenstoffatomen und anschließend mit einem mindestens eine Isocyanatgruppe enthaltenden Isocyanat. Hierbei ist es besonders bevorzugt, dass ein zweiwertiger Alkohol mit drei bis acht Kohlenstoffatomen eingesetzt wird.

Als Diisocyanate können beispielsweise 2,4-Toluoldiisocyanat (2,4-TDI), 2,6-Toluoldiisocyanat (2,6-TDI), Isophorondiisocyanat (IPDI), 4,4'-Diisocyanatodiphenylmethan (4,-4'-MDI), 2,4'-Diisocyanatodiphenylmethan (2,-4'-MDI), polymeres Diphenylmethandiisocyanat (pMDI) oder Hexamethylendiisocyanat (HDI) eingesetzt werden. Weitere Beispiele für Diisocyanate sind Diphenylmethandiisocyanat (MDI, DESMODUR^{®}44M, Fa. Bayer Material-Science AG, NCO-Gehalt ca. 33,6 w-%, monomeres aromatisches Diisocyanat), Diphenylmethandiisocyanat mit hohem Anteil des 2,4'-Isomeren (MDI_{Isomer}, DESMODUR^{®}2460M, Fa. Bayer Material Science AG, NCO-Gehalt ca. 33,6 w-%, monomeres aromatisches Diisocyanat) und ein 1:1-Gemisch von 2,2,4- und 2,4,4-Trimethylhexamethylendiisocyanat (TMDI, VESTANAT^{®}TMDI, Fa. Evonik Industries, NCO-Gehalt ca. 40 w-%, methylgruppenverzweigtes, aliphatisches Diisocyanat).

Für eine besonders bevorzugte Klebstoffzusammensetzung wird vorteilhaft ein Polylactid-Derivat eingesetzt, das erhalten wurde, indem ein Polylactid und/oder ein geeignetes Polylactid-Derivat mit MDIᵢₛₒₘₑᵣ und einer oder mehreren Alkoholverbindungen, ausgewählt aus der Gruppe 2-Ethyl-1,3-hexandiol, 1,2-Hexandiol und 1,4-Butandiol, wobei 2-Ethyl-1,3-hexandiol und 1,2-Hexandiol besonders bevorzugt sind, umgesetzt wird.

Polylactid-Derivate, bei denen die Endgruppen jeweils Carboxylgruppen sind, können beispielsweise vorteilhaft hergestellt werden, indem die Polykondensation von Milchsäure in Gegenwart einer mindestens zweiwertigen Säure, insbesondere eines entsprechenden Säurechlorids oder Säureanhydrids durchgeführt wird. Ein Beispiel hierfür ist Bernsteinsäurechlorid oder Bernsteinsäureanhydrid.

Polylactid oder Polylactid-Derivate mit Carboxylgruppen können zum Erhalt verbesserter Klebstoffzusammensetzungen insbesondere für eine weitere Modifikation mit einem Epoxid umgesetzt werden.

In einer weiteren bevorzugten Ausführungsform der erfindungsgemäßen Klebstoffzusammensetzung ist das Polylactidsäure-Derivat erhältlich durch Umsetzung eines Polylactids mit 5 bis 100 2-Hydroxypropionsäuremonomereinheiten, in dessen Polymerkette ein Anteil an D-2-Hydroxypropionsäuremonomereinheiten 5 bis 45 % und ein Anteil an L-2-Hydroxypropionsäuremonomereinheiten 55 bis 95 %, bezogen auf die gesamte Menge an Hydroxypropionsäuremonomereinheiten, beträgt, mit einem Epoxid mit mindestens drei Kohlenstoffatomen.

Hierbei kann ein niedermolekulares Epoxid eingesetzt werden. Verwendet werden können auch Epoxide mit mehr als einer Epoxidgruppe. In einer besonders bevorzugten Ausführungsform wird als Epoxid ein epoxydiertes Acrylat-Styrol-Copolymer eingesetzt, insbesondere mit einer gewichtsmittleren Molekularmasse von 5000 bis 10000 g/mol. Ein besonders geeignetes epoxydiertes Acrylat-Styrol-Copolymer ist unter der Bezeichnung JONCRYL^{®}4368-CS von der BASF SE erhältlich. JONCRYL^{®}4368-CS ist ein multifunktionales epoxydiertes Reaktivpolymer auf Basis von Acrylat/Styrol-Copolymeren, das speziell für die Anwendungen von PLA und PET in der Lebensmittelindustrie formuliert wurde (EU/FDA-Zulassung). JONCRYL^{®}4368-CS ist ein polymerer Kettenverlängerer mit einer gewichtsmittleren Molmasse M_{w} von 6.800 g/mol und einem Äquivalentgewicht der Epoxidgruppen von 285 g/mol. JONCRYL^{®}4368-CS kann durch die Ringöffnung mit einer COOH-Gruppe des Polylactids und/oder eines Polylactid-Derivates reagieren, wodurch es zur Kettenverlängerung kommt. Durch die Umsetzung mit JONCRYL^{®}4368-CS wird beispielsweise die hydrolytische Stabilität der Klebstoffzusammensetzung erhöht.

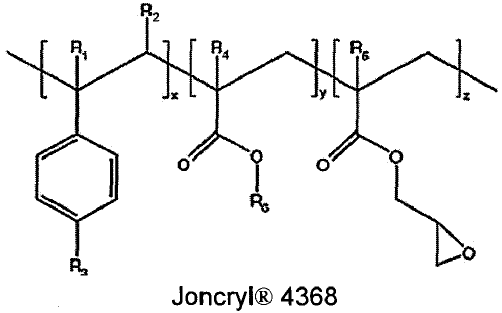

Besonders vorteilhafte Klebstoffzusammensetzungen enthalten das Polylactid-Derivat in einer Menge von 10 bis 50 Gew.-%, vorzugsweise von 20 bis 35 Gew.-%, und besonders bevorzugt von 20 bis 25 Gew.-%, bezogen auf die Klebstoffzusammensetzung.

Im Hinblick auf die Verträglichkeit der Komponenten und die Klebekraft hat es sich überdies als vorteilhaft erwiesen, wenn die Klebstoffzusammensetzung Weichmacher und/oder Tackifier in einer Menge von 50 bis 90 Gew.-%, vorzugsweise von 65 bis 80 Gew.-% und besonders bevorzugt von 75 bis 80 Gew.-%, bezogen auf die Klebstoffzusammensetzung, enthält.

Als Tackifier, d.h. als klebrig machende Harze, können übliche Tackifier verwendet werden. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze, welche ganz oder teilweise hydriert sein können. Beliebige Kombinationen dieser und weiterer Harze können eingesetzt werden, um die Eigenschaften der resultierenden Klebstoffzusammensetzung wunschgemäß einzustellen. Im Allgemeinen lassen sich alle mit dem Polylactid-Derivat kompatiblen (löslichen) Harze einsetzen. Insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Angaben im Handbook of Pressure Sensitive Adhesive Technology" von Donatas Satas (van Nostrand, 1989) sei ausdrücklich hingewiesen. In Hinblick auf die Verträglichkeit und die Klebewirkung im Zusammenwirken mit dem Polylactid-Derivat hat es sich als besonders vorteilhaft gezeigt, dass der Tackifier ein Kohlenwasserstoffharz und/oder ein Polyesterpolyol umfasst oder aus diesem besteht. Ein besonders geeignetes Kohlenwasserstoffharz ist beispielsweise Kolophoniumharz.

Als Weichmacher kann ein in Klebstoffen üblicherweise verwendeter Weichmacher verwendet werden. Geeignete Weichmacher sind beispielsweise Polyether, wie z.B. Polyethylenglykol (PEG) oder Polypropylenglykol (PPG), organische Säuren und deren Ester und sonstige Derivate, z.B. Ölsäuren, Citronensäurederivate oder epoxidierte Verbindungen (z.B. epoxidiertes Sojaöl). In Hinblick auf die Verträglichkeit mit dem Polylactid-Derivat hat es sich jedoch als besonders vorteilhaft erwiesen, als Weichmacher ein oder mehrere Citronensäurederivate zu verwenden.

Erfindungsgemäß sind im Allgemeinen solche Klebstoffzusammensetzungen bevorzugt, bei denen das Gewichtsverhältnis zwischen Weichmacher und Tackifier im Bereich von bis 0,2 bis 2,5, vorzugweise von 0,4 bis 1,5, und ganz besonders bevorzugt im Bereich von 0,5 bis 0,8 liegt. Allerdings hängt das optimale Gewichtsverhältnis auch von der Art der Komponenten und deren Verträglichkeit sowie dem Einsatzzweck der Klebstoffzusammensetzung ab. Jedenfalls können leicht Klebstoffzusammensetzungen hergestellt werden, die bei Raumtemperatur oder auch bei Minusgraden dauerhaft klebrig sind.

In einer bevorzugten Ausführungsform ist die Klebstoffstoffzusammensetzung eine Schmelzklebstoffzusammensetzung, insbesondere eine Schmelzhaftklebstoffzusammensetzung. Schmelzklebstoffzusammensetzungen enthalten im Allgemeinen kein Lösungsmittel, sondern werden in der Schmelze auf ein geeignetes Substrat aufgetragen. Durch das Erwärmen erniedrigt sich die Viskosität hinreichend, so dass er in flüssiger Form aufgetragen werden kann.

In der Schmelze kann dann eine Klebeverbindung eingestellt werden. Die Schmelzklebstoffe werden in festem Zustand (als Granulat, in Blockform oder auch als Sticks) von einem Hersteller angeliefert und mittels Schmelzgeräten im Allgemeinen bei Temperaturen von +60 bis +200° C aufgeschmolzen, in dieser flüssigen Form auf einen der Klebepartner aufgebracht und sofort mit dem anderen Klebepartner zusammengefügt. Die Festigkeit wird sehr schnell unmittelbar nach Erkalten und Erstarren der Schmelze erreicht. Schmelzklebstoffe bestehen zu 100% aus festen Bestandteilen. Sie haben gegenüber Lösemitteln und Dispersionen keinen Schwund und füllen Fugen gut. Für die Anwendung ist wichtig, dass die Klebstoffzusammensetzung beim Fügen der Teile noch warm und flüssig ist, um die Klebeflächen gut zu benetzen. Dies ist umso besser der Fall, je schneller nach dem Auftrag der Klebstoffzusammensetzung die Teile zusammengefügt werden. Normalerweise wird auf Teile aufgetragen, die Raumtemperatur aufweisen. Die aufgetragene Schmelze kühlt deshalb relativ rasch ab, besonders wenn der Werkstoff eine gute Wärmeleitfähigkeit hat. Die so genannte "offene Zeit" kann deshalb sehr kurz sein und hängt hier nicht nur von der Klebstoffzusammensetzung, sondern im besonderen Maße auch von der Art der verklebten Teile sowie von der Temperatur der Schmelze, der Werkstoffe und der Raumtemperatur sowie von den aufgetragenen Mengen ab. Ein Vorwärmen der Fügeteile verlängert die offene Zeit und verbessert oft die Adhäsion. Der Vorgang des Schmelzens und Erstarrens ist umkehrbar. Die erfindungsgemäßen Klebstoffzusammensetzungen, vorzugsweise Schmelzklebstoffzusammensetzungen, bleiben im Allgemeinen thermoplastisch, d.h. sie können wieder geschmolzen werden, haben also eine begrenzte Wärmefestigkeit und sind bei Bedarf durch Wärme wieder lösbar. Das Schmelzverhalten der erfindungsgemäßen Schmelzklebstoffzusammensetzungen bestimmt weitgehend die Verarbeitungs- und Endeigenschaften. Derartige Hotmelt-Klebstoffzusammensetzungen werden insbesondere als Konstruktionsklebstoffe eingesetzt.

In einer bevorzugten Ausführungsform der Erfindung ist die Klebstoffzusammensetzung daher eine Schmelzklebstoffzusammensetzung, welche als Schmelze auf ein erstes Substrat aufgetragen werden und eine Verbindung zwischen dem ersten Substrat und einem zweiten Substrat herstellen kann.

Ein Schmelzklebstoff kann auch ein Haftklebstoff sein. Im Folgenden soll jedoch zwischen Schmelz- und Haftschmelzklebstoff unterschieden werden. Ein Schmelzklebstoff verliert nach Erkalten seine Eigenklebrigkeit und Sofortklebrigkeit, wie sie z.B. nach FINAT Test N. 1 und Nr. 9 gemessen werden kann. Ein Haftschmelzklebstoff verfügt auch nach Erkalten noch über eine messbare Eigen- und Sofortklebrigkeit. Mit einem Haftschmelzklebstoff kann auch im kalten Zustand eine Verbindung zwischen zwei Substraten hergestellt werden, während dies beim Schmelzklebstoff nur im heißen Zustand möglich ist.

Haftschmelzklebstoffe (hierin insbesondere "Haftschmelzklebstoffzusammensetzungen" genannt), die nach dem Auftragen auf ein Trägermaterial hochviskos und dauerklebrig bleiben, können durch Anwendung von Druck auf ein Substrat aufgebracht werden und dort haften bleiben.

In einer weiteren bevorzugten Ausführungsform ist die Klebstoffzusammensetzung daher eine Schmelzhaftklebstoffzusammensetzung, welche nach Erhitzen auf ein erstes Substrat aufgetragen werden und eine Verbindung zwischen dem ersten Substrat und einem zweiten Substrat herstellen kann, wobei die Schmelzhaftklebstoffzusammensetzung nach dem Erkalten noch über eine Eigen- und Sofortklebrigkeit verfügt.

Haftschmelzklebstoffe bleiben dauerklebrig und können im Allgemeinen wieder abgelöst werden. Sofern geeignete Komponenten ausgewählt sind, geht dies auch ohne Klebstoffrückstände und ohne Zerstörung der zusammengeklebten Teile. Ihr Einsatz ist in der Regel beschränkt auf Verklebungen mit geringen Anforderungen an Festigkeit und Wärmebeständigkeit, z.B. für die Herstellung von Klebebändern und selbstklebenden Etiketten. Haftschmelzklebstoffe haften durch die andauernde Oberflächenklebrigkeit auch auf schwierig zu klebenden Werkstoffen, wie z.B. Polyethylen und Polypropylen. Um diese Klebrigkeit bis zur Anwendung nicht zu verlieren und zum Schutz vor einem unerwünschten Zusammenkleben, werden damit beschichtete Stoffe bis zur Anwendung im Allgemeinen geschützt, z.B. durch Abdeckung mit siliconisiertem Papier. Haftschmelzklebstoffzusammensetzungen werden im Allgemeinen mit speziellen Schmelz- und Auftragsgeräten verarbeitet. Sie werden wegen ihrer Dauerklebrigkeit in der Regel in Blockform oder in Form von Pillows, d.h. Kissen, angeboten.

In einer besonders bevorzugten Ausführungsform der Klebstoffzusammensetzung, welche insbesondere für Schmelzhaftklebstoffe geeignet ist, enthält die Klebstoffzusammensetzung das Polylactid-Derivat in einer Menge von 15 bis 40 Gew.-%, besonders bevorzugt 20 bis 30 Gew.-%, ein Kohlenwasserstoff-Harz als Tackifier in einer Menge von 30 bis 60 Gew.-%, besonders bevorzugt 40 bis 50 Gew.-%, und ein Citronensäurederivat als Weichmacher in einer Menge von 20 bis 40 Gew.-%, besonders bevorzugt 25 bis 35 Gew.-%, bezogen auf die Summe dieser Komponenten.

Die erfindungsgemäße Klebstoffzusammensetzung enthält in bevorzugten Ausführungsformen noch Additive zur Verbesserung und Abstimmung der Eigenschaften der Klebstoffzusammensetzung auf einen Einsatzzweck. Beispielsweise können anorganische Füllstoffe (Bindemittel) wie beispielsweise Kieselsäure, CaCO₃, Al(OH)₃, TiO₂, ZnO, aber auch organische Verbindungen z.B. Thermoplaste wie beispielsweise Wachse oder thermoplastische Polyurethane oder Ruße und Pigmente zugegeben werden, um beispielsweise die Viskosität und den Durchschlag zu verbessern. Letzteres ist insbesondere bei der Auftragung der Klebstoffzusammensetzung auf einem Papierträger von Bedeutung, beispielsweise bei Etiketten. Ein Durchschlag, d.h. das Hindurchdringen der Klebstoffzusammensetzung durch das Substrat, z.B. Papier, würde einen ästhetischen Eindruck verschlechtern und könnte bei einem sehr alt erscheinenden Etikett den Eindruck einer bereits alten Ware erzeugen.

Darüber hinaus können Additive zur Stabilisierung der Klebstoffzusammensetzung gegenüber beispielsweise UV-Strahlung, Oxidationsmitteln oder gegenüber einem thermischen Abbau eingesetzt werden.

Insbesondere ist eine Stabilisierung gegen thermischen Abbau durch Einsatz von Antioxidantien vorteilhaft. Als Antioxidantien können Radikalfänger wie sterisch gehinderte Phenole oder sekundäre, aromatische Amine eingesetzt werden. Ferner können Peroxidzersetzer wie Phosphite, Phosphonite, Thioether, Carbodiimide und Zink-dibutyldithiocarbamat als sekundäre Antioxidantien eingesetzt werden. Aus der Vielzahl der Phosphorverbindungen sind geeignete Stabilisatoren organische Phosphinsäurederivate, Phosphite und Phosphonate. Aus den unterschiedlichen Wirkungsmechanismen ist der Vorteil des Einsatzes von Mischungen zu erkennen.

Unspezifische thermooxidative und hydrolytische Abbaureaktionen, vorzugsweise bei der Verformung dieser aliphatischen Polyester, werden durch organische Phosphorverbindungen (Thermooxidation) bzw. wasserbindende Additive (Hydrolyse) wie Carbodiimide, aktivierte Säurederivate oder Isocyanate inhibiert. Zur Inhibierung des Abbaus werden als Antioxidantien die seit langem bekannten Phosphite bzw. sterisch gehinderten Phenole eingesetzt, wobei vorzugsweise kommerziell verfügbare IRGANOX-Typen genannt werden. Ein weiteres geeignetes Antioxidans ist 2,2-bis(((3-(3,5-di-tert-butyl-4-hydroxyphenyl)propanoyl)oxy)methyl)propan-1,3-diyl-bis(3-(3,5-di-tert-butyl-4-hydroxyphenyl)-propanoat.

Die Konzentration dieser Antioxidantien liegt vorzugsweise im Bereich von 0,5 bis 2 Gew.-%, bezogen auf die Klebstoffzusammensetzung.

Gegenstand der Erfindung ist außerdem ein Verfahren zur Herstellung einer Klebstoffzusammensetzung, umfassend ein Polylactid und/oder ein Polylactid-Derivat, einen Weichmacher und einen Tackifier, wobei der Klebstoff ein Polylactid-Derivat enthält, in dessen Polymerkette ein Anteil an D-2-Hydroxypropionsäuremonomereinheiten 5 bis 45 %, und ein Anteil an L-2-Hydroxypropionsäuremonomereinheiten 55 bis 95 %, bezogen auf die gesamte Menge an Hydroxypropionsäuremonomereinheiten, beträgt, wobei die Polymerkette mindestens ein Segment mit 5 bis 100 Hydroxypropionsäuremonomereinheiten aufweist, an dessen Ende oder Enden über eine Estergruppe, Ethergruppe oder Urethangruppe gebunden ein organischer Rest mit mindestens 3 Kohlenstoffatomen angeordnet ist, wobei ein Polylactid mit 5 bis 100 Hydroxypropionsäuremonomereinheiten, in dessen Polymerkette ein Anteil an D-2-Hydroxypropionsäuremonomereinheiten 5 bis 45 % und ein Anteil an L-2-Hydroxypropionsäuremonomereinheiten 55 bis 95 %, bezogen auf die gesamte Menge an Hydroxypropionsäuremonomereinheiten, beträgt, entweder
(a) zunächst mit einem mindestens zweiwertigen Alkohol mit mindestens drei Kohlenstoffatomen und anschließend mit einem mindestens eine Isocyanatgruppe enthaltenden Isocyanat umgesetzt wird, oder
(b) mit einem Epoxid mit mindestens drei Kohlenstoffatomen
umgesetzt wird.

Schließlich ist Gegenstand der Erfindung auch die Verwendung der hierin beschriebenen Klebstoffzusammensetzung als Haftschmelzklebstoff für Etiketten und Klebestreifen oder Klebebänder im Lebensmittel-, Logistik- und Hygienebereich (insbesondere für Windeln, Damenbinden) sowie als Schmelz- und/oder Haftschmelzklebstoff im Lebensmittel-, Hygiene-, Automobil-, und Verpackungsbereich.

Die erfindungsgemäßen Klebstoffzusammensetzungen können zur direkten Etikettierung von Lebensmitteln wie z.B. Bananen oder Orangen eingesetzt werden. Im Bereich der Lebensmittelverpackungen können die Klebstoffzusammensetzungen besonders zusammen mit biobasierten Folien, d.h. Folien, die im Wesentlichen unter Einsatz eines nachwachsenden Rohstoffs hergestellt worden sind, eingesetzt werden. Im Bereich der Kunststoffe zur Herstellung von Folien oder Trays für Lebensmittel oder auch für Wegwerfgeschirr besteht bereits eine relativ große Auswahl an biobasierten und biologisch abbaubaren Produkten. Als Grundstoffe kommen hier zum Beispiel neben PLA, PHB und modifizierte Stärke zum Einsatz. In Kombination mit der erfindungsgemäßen Klebstoffzusammensetzung kann so der Anteil an nachwachsenden Rohstoffen in der Verpackung weiter gesteigert werden. Durch den hohen Anteil an nachwachsenden Rohstoffen und die Struktur des verwendeten Polylactid-Derivates verbessert sich die Möglichkeit einer gemeinsamen Kompostierung von Lebensmittelfüllgut und Verpackung. Dies birgt besonders für den Lebensmittelhandel ein großes Einsparungspotential, da für diesen Fall abgelaufene Lebensmittel vor einer Kompostierung nicht mehr entpackt werden müssen. Die erfindungsgemäße Klebstoffzusammensetzung kann hierbei sowohl zur Herstellung von Selbstklebeetiketten als auch zur Laminierung von verschiedenen Folien verwendet werden. Weitere mögliche Anwendungen sind die Verklebung von Verstärkungsfolien für die Griffe von Folien-Tragetaschen oder die Verklebung von Tragegriffen für folienverpackte Getränkeflaschen.

Im Logistikbereich kann die Klebstoffzusammensetzung in Kombination mit biobasierten Folien zur Herstellung von 100% biobasierten Versandtaschen eingesetzt werden.

Im Hygienebereich steht vor allem der Nachhaltigkeitsgedanke im Vordergrund, weshalb auch hier nach biobasierten Materialien gesucht wird. Die erfindungsgemäßen Klebstoffzusammensetzungen lassen sich hier als Konstruktionsklebstoff für die großflächige Verklebung von Folien und Non-Woven-Vliesen einsetzen, wie sie beispielsweise bei der Herstellung von Windeln angewandt werden. Sie können jedoch auch als Klebstreifen für eine temporäre Fixierung z.B. in Damenbinden Verwendung finden.

In einer besonderen Ausführungsform kann die erfindungsgemäße Klebstoffzusammensetzung auch zur Verklebung von Kartonagen eingesetzt werden. Es bietet sich auch an, die Klebstoffzusammensetzung zur Verklebung von Karton und biobasiertem Isolier- und/oder Polstermaterial in speziellen Verpackungen einzusetzen.

Die Erfindung hat mehrere Vorteile. Es wird eine Klebstoffzusammensetzung bereitgestellt, die insbesondere als Schmelzklebstoff und als Schmelzhaftklebstoff eingesetzt werden kann. Durch Bereitstellung geeigneter Polylactid-Derivate und in Ausführungsformen der Erfindung besonderer Weichmacher und Tackifier in Kombination mit diesen Polylactid-Derivaten wird eine für viele Verwendungszwecke geeignete Klebstoffzusammensetzung bereitgestellt. Dabei kann ein hoher Anteil an nachwachsenden und/oder biologisch abbaubaren Komponenten eingesetzt werden.

Überraschenderweise hat es sich gezeigt, dass sich Klebstoffformulierungen mit einem D-Anteil von 5 bis 45 % durch verbesserte Eigenschaften hinsichtlich Zähigkeit, Dehnbarkeit und Viskosität, Homogenität und hohe Eigenklebrigkeit auszeichnen. Dies gilt insbesondere bei einem D-Anteil von 15 bis 30 %, bezogen auf die gesamte Menge an D-2-Hydroxpropionsäuremonomeren und L-2-Hydroxpropionsäuremonomeren, und besonders bevorzugt bei einem D-Anteil von 20 bis 25 %.

Die vorliegende Erfindung ermöglicht es, dass eine Klebstoffzusammensetzung auf der Basis nachwachsender Rohstoffe auf einfache Weise, z.B. mittels Düsenauftrag bei erhöhten Temperaturen, auf Etiketten aufgetragen werden kann. Hierbei ermöglicht die Erfindung bei Verwendung von auf besondere Weise hergestellten Polylactid-Derivaten insbesondere auch die Benutzung auf Etiketten im Lebensmittelbereich.

Die Erfindung wird im Folgenden anhand von nicht einschränkenden Beispielen illustriert. Darin beziehen sich Prozentangaben auf das Gewicht.

### Beispiele

Als Beispiele wurden verschiedene Klebstoffzusammensetzungen (Klebstoffzusammensetzungen 1 bis 13, davon 3, 5, 6, 9, 11-13 erfindungsgemäß) hergestellt, die sich in dem eingesetzten Polylactid bzw. Polylactid-Derivat sowie in den Zusätzen unterscheiden. Dabei wurde ausgegangen von einer Klebstoffzusammensetzung mit den folgenden Komponenten und relativen Mengen, die weiter unten noch im Detail beschrieben sind:

| | |
|---|---|
| Polylactid oder Polylactid-Derivat (PL-Derivat): | 25,0 Gewichtsteile |
| Kohlenwasserstoffharz (Tackifier): | 45,0 Gewichtsteile |
| Citronensäureester (Weichmacher): | 30,0 Gewichtsteile |
| Antioxidationsmittel: | 1,0 Gewichtsteile |

Als Antioxidationsmittel wurde 2,2-bis(((3-(3,5-di-tert-butyl-4-hydroxyphenyl)propanoyl)oxy) methyl)-propan-1,3-diyl-bis(3-(3,5-di-tert-butyl-4-hydroxy-phenyl)propanoat eingesetzt.

Die jeweiligen Klebstoffzusammensetzungen wurden erhalten durch Mischen der einzelnen Komponenten bei 140 bis 160 °C in einem geeigneten Kneter oder Rührer, wie sie standardmäßig bei der Herstellung von Schmelzklebstoffen Verwendung finden, wobei in einem ersten Schritt zunächst die eingesetzten Harze und Stabilisatoren aufgeschmolzen wurden und anschließend in einem oder mehreren Schritten das Polymer und der Weichmacher zugesetzt wurden.

Das mittlere Molekulargewicht (Mₙ) der Polylactide und Polylactidderivate wurde per Größenausschlußchromatographie (Gelpermationschromatographie, GPC) gegen einen Polymethylmethacrylat(PMMA)-Standard bestimmt.

In den Beispielen und Vergleichsbeispielen wurden die folgenden Polylactide und Polylactid-Derivate eingesetzt:

### Polylactid 1

Bei 130 °C unter einer Stickstoffatmosphäre entwässerte L-2-Hydroxypropionsäure-monomere wurden für 2 h bei 160 °C unter Stickstoffatmosphäre in Gegenwart von 0.5 Gew.% ZnCl₂ als Katalysator, bezogen auf die Menge an Hydroxypropionsäuremonomereinheiten, polymerisiert. Die Temperatur wurde dann auf 180 °C erhöht und ein Vakuum von max. 10 mbar angelegt. Das resultierende Polylactid besaß eine mittlere Molmasse (Mₙ) von 3867 g/mol und eine Polydispersität von 1,9.

### Polylactid 2a und 2b

Eine bei 130 °C unter einer Stickstoffatmosphäre entwässerte Mischung aus L-2-Hydroxypropionsäuremonomereinheiten (80 Gew.%) und D-2-Hydroxypropionsäuremonomereinheiten (20 Gew.%) wurde für 2 h bei 160 °C unter Stickstoffatmosphäre mit a) 0,5 Gew.% Zr(acac)₄ oder b) 0,5 Gew.% Titan(IV)-Butylat als Katalysator, bezogen auf die Menge an Hydroxypropionsäuremonomereinheiten, polymerisiert. Die Temperatur wurde anschließend auf 180 °C erhöht und es wurde ein Vakuum von max. 10 mbar angelegt. Das resultierende Polylactid besaß eine mittlere Molmasse (Mₙ) von a) 4830 g/mol bzw. b) 3300 g/mol und eine Polydispersität von a) 1,75 bzw. b) 1,54.

### Polylactid 3

Eine bei 130 °C unter einer Stickstoffatmosphäre entwässerte Mischung aus L-2-Hydroxypropionsäuremonomereinheiten (50 Gew.%) und D-2-Hydroxypropionsäuremonomereinheiten (50 Gew.%) wurde zunächst für 2 h bei 160 °C unter Stickstoffatmosphäre mit 0,5 Gew.% Zr(acac)₄ als Katalysator, bezogen auf die Menge an Hydroxypropionsäuremonomereinheiten, polymerisiert. Die Temperatur wurde anschließend auf 180 °C erhöht und es wurde ein Vakuum von max. 10 mbar angelegt. Das resultierende Polylactid besaß eine mittlere Molmasse (Mₙ) von 5241 g/mol und eine Polydispersität von 1.72.

### Polylactid-Derivat 1:

Bei 130 °C unter einer Stickstoffatmosphäre entwässerte L-2-Hydroxypropionsäuremonomere wurden zunächst für 2 h bei 160 °C unter Stickstoffatmosphäre in Gegenwart von 0,5 Gew.% Zr(acac)₄, bezogen auf die Gesamtmenge an Monomeren, als Katalysator umgesetzt mit 2 Mol-%, bezogen auf die Menge an Hydroxypropionsäuremonomereinheiten, Bernsteinsäureanhydrid. Die Temperatur wurde dann auf 180 °C erhöht und es wurde ein Vakuum von max. 10 mbar angelegt. Das resultierende COOH-terminierte Polylactidderivat besaß eine mittlere Molmasse (Mₙ) von 1240 g/mol.

### Polylactid-Derivat 2

Bei 130 °C unter einer Stickstoffatmosphäre entwässerte L-2-Hydroxypropionsäuremonomere wurden bei zunächst für 2 h bei 160 °C unter Stickstoffatmosphäre in Gegenwart von 0,5 Gew.% Zr(acac)₄, bezogen auf die Gesamtmenge an Monomeren, als Katalysator umgesetzt mit 2 Mol-%, bezogen auf die Menge an Hydroxypropionsäuremonomereinheiten, 1,4 Butandiol. Die Temperatur wurde im Folgenden auf 180 °C erhöht und es wurde ein Vakuum von max. 10 mbar angelegt. Das resultierende OH-terminierte Polylactidderivat besaß eine mittlere Molmasse (Mₙ) von 1990 g/mol und eine Polydispersität von 1,75.

### Polylactid-Derivat 3

Eine bei 130 °C unter einer Stickstoffatmosphäre entwässerte Mischung aus L-2-Hydroxypropionsäuremonomereinheiten (80 Gew.%) und D-2-Hydroxypropionsäuremonomereinheiten (20 Gew.%) wurde in Anwesenheit von 0,5 Gew.% Titan(IV)-isopropylat, bezogen auf die Gesamtmenge an Monomeren, als Katalysator zunächst für 2 h bei 160 °C unter Stickstoffatmosphäre umgesetzt mit 2 Mol-%, bezogen auf die Menge an Hydroxypropionsäuremonomereinheiten, 1,4-Butandiol. Die Temperatur wurde anschließend auf 180 °C erhöht und es wurde ein Vakuum von max. 10 mbar angelegt. Das resultierende OH-terminierte Polylactidderivat hatte eine mittlere Molmasse (Mₙ) von 2940 g/mol und eine Polydispersität von 1,49.

### Polylactid-Derivat 4

Eine bei 130 °C unter einer Stickstoffatmosphäre entwässerte Mischung aus L-2-Hydroxypropionsäuremonomereinheiten (50 Gew.-%) und D-2-Hydroxypropionsäuremonomereinheiten (50 Gew.%) wurde in Gegenwart von 0,5 Gew.% Zr(acac)₄, bezogen auf die Gesamtmenge an Monomeren, als Katalysator zunächst für 2 h bei 160 °C unter Stickstoffatmosphäre umgesetzt mit 2 Mol-%, bezogen auf die Menge an Hydroxypropionsäuremonomereinheiten, 1,4-Butandiol. Die Temperatur wurde im Folgenden auf 180 °C erhöht und es wurde ein Vakuum von max. 10 mbar angelegt. Das resultierende OH-terminierte Polylactidderivat hatte eine mittlere Molmasse (Mₙ) von 1900 g/mol und eine Polydispersität von 1,73.

### Polylactid-Derivat 5

Eine bei 130 °C unter einer Stickstoffatmosphäre entwässerte Mischung aus L-2-Hydroxypropionsäuremonomereinheiten (80 Gew.%) und D-2-Hydroxypropionsäuremonomereinheiten (20 Gew.%) wurde in Gegenwart von 0,5 Gew.% Titan(IV)-isopropylat, bezogen auf die Gesamtmenge an Monomeren, als Katalysator zunächst für 2 h bei 160 °C unter Stickstoffatmosphäre umgesetzt mit 2 Mol-%, bezogen auf die Menge an Hydroxypropionsäuremonomereinheiten, 1,2-Hexandiol. Die Temperatur wurde im Folgenden auf 180 °C erhöht und es wurde ein Vakuum von max. 10 mbar angelegt. Das resultierende OH-terminierte Polylactidderivat hatte eine mittlere Molmasse (Mₙ) von 6000 g/mol und eine Polydispersität von 1,69.

### Polylactid-Derivat 6:

Eine bei 130 °C unter einer Stickstoffatmosphäre entwässerte Mischung aus L-2-Hydroxypropionsäuremonomereinheiten (80 Gew,%) und D-2-Hydroxypropionsäuremonomereinheiten (20 Gew.%) wurde in Anwesenheit von 0,5 Gew.% Titan(IV)-isopropylat, bezogen auf die Gesamtmenge an Monomeren, als Katalysator zunächst für 2 h bei 160 °C unter Stickstoffatmosphäre umgesetzt mit 2 Mol-%, bezogen auf die Menge an Hydroxypropionsäuremonomereinheiten, 2-Ethyl-1,3-Hexandiol. Die Temperatur wurde im Folgenden auf 180 °C erhöht und es wurde ein Vakuum von max. 10 mbar angelegt. Das resultierende OH-terminierte Polylactidderivat hatte eine mittlere Molmasse (Mₙ) von 4950 g/mol und eine Polydispersität von 1,78.

### Polylactid-Derivat 7:

Eine 80 zu 20 Gew.% Mischung aus Polylactid-Derivat 4 und PPG 2000 wurde unter einer Stickstoffatmosphäre bei 180 °C aufgeschmolzen und für 8 h bei dieser Temperatur gerührt. Das resultierende Polylactid-Derivat 7 hatte eine mittlere Molmasse (Mₙ) von 3500 g/mol und eine Polydispersität von 2.

### Polylactid-Derivat 8:

Eine 50 zu 50 Gew% Mischung aus Polylactid-Derivat 4 und PPG 2000 wurde unter einer Stickstoffatmosphäre bei 180 °C aufgeschmolzen und für 8 h bei dieser Temperatur gerührt. Das resultierende Polylactid-Derivat 8 besaß eine mittlere Molmasse (Mₙ) von 9200 g/mol und eine Polydispersität von 1,16.

Umsetzung von OH-terminierten Polylactid-Derivaten mit einer MDI-Isomerenmischung:
Das Polylactid-Derivat wurde bei 160 °C unter einer Stickstoffatmosphäre aufgeschmolzen und mit einer den enthaltenen OH-Gruppen äquimolaren Menge Isocyanat in der Form einer MDI-Isomerenmischung (Desmodur® 2460M) versetzt. Durch Messung der IR-Absorption der Reaktionsmischung wurde der Reaktionsverlauf verfolgt und an Hand der Abnahme der Isocyanatbande die Vollständigkeit der Umsetzung überprüft.

### Polylactid-Derivat 9:

Das Polylactid-Derivat 3 wurde umgesetzt mit Desmodur® 2460M und ergab ein Polylactid-Derivat mit einer mittleren Molmasse (Mₙ) von 5800 g/mol und einer Polydispersität von 1,74.

### Polylactid-Derivat 10:

Das Polylactid-Derivat 4 wurde umgesetzt mit Desmodur® 2460M und ergab ein Polylactid-Derivat mit einer mittleren Molmasse (Mₙ) von 2728 g/mol und einer Polydispersität von 1,75.

### Polylactid-Derivat 11:

Das Polylactid-Derivat 5 wurde umgesetzt mit Desmodur® 2460M und ergab ein Polylactid-Derivat mit einer mittleren Molmasse (Mₙ) von 18500 g/mol und einer Polydispersität von 2,69.

### Polylactid-Derivat 12:

Das Polylactid-Derivat 6, umgesetzt mit Desmodur® 2460M, ergab ein Polylactid-Derivat mit einer mittleren Molmasse (Mₙ) von 14300 g/mol und einer Polydispersität von 3,35.

### Polylactid-Derivat 13:

Polylactid 2b wurde mit JONCRYL®4368-CS in einer Menge von 5 Gew.-%, bezogen auf die Menge an Polylactid, bei 180 °C unter einer Stickstoffatmosphäre aufgeschmolzen und für 8 h gerührt. Das erhaltene Polylactid-Derivat hatte eine mittlere Molmasse (Mₙ) von 4500 g/mol und eine Polydispersität von 2,98.

Mit den in Tabelle 1 genannten Polylactiden bzw. Polylactid-Derivaten (PL-Derivaten) wurden Klebstoffzusammensetzungen hergestellt, die anschließend auf ihre klebtechnischen Eigenschaften hin untersucht wurden. Die Klebstoffzusammensetzungen setzten sich jeweils aus folgenden Bestandteilen zusammen, wobei in Klammern ein Hinweis auf die chemische Zusammensetzung angegeben ist:

| | | |
|---|---|---|
| Polylactid(derivat) | 25,0 Gewichtsteile | |
| Novares^{®} TNA 120 | 27,0 Gewichtsteile | (C₉-Kohlenwassserstoffharz) |
| Novares^{®} TV 100 | 18,0 Gewichtsteile | (C₉-Kohlenwassserstoffharz) |
| Citrofol^{®} B II | 30,0 Gewichtsteile | (Acetyltributylcitrat) |
| Irganox® 1010 | 1,0 Gewichtsteil | (phenolisches Alterungsschutzmittel) |

Als klebtechnisch wichtige Eigenschaften wurden die Homogenität, Viskosität, Festigkeit, Zähigkeit und Fingertack (Eigenklebrigkeit) der Klebstoffzusammensetzungen untersucht. Die Bewertung dieser Eigenschaften erfolgte dabei visuell und - im Falle des Fingertacks - manuell. Die Ergebnisse sind in der Tabelle 1 dargestellt.

**Tabelle 1**

| Klebstoffzusammensetzung Nr. | Polymer | Eigenschaften | | | | |
|---|---|---|---|---|---|---|
| | | Homogenität | Viskosität | Festigkeit | Zähigkeit | Fingertack |
| 1 | Polylactid 1 | ++ | ++ | ++ | -- | -- |
| 2 | Polylactid 2a | ++ | ++ | - | ++ | ++ |
| 3 | Polylactid 3 | - | + | -- | ++ | + |
| 4 | PL-Derivat 7 | ++ | -- | --- | + | + |
| 5 | PL-Derivat 8 | ++ | + | -- | ++ | ++ |
| 6 | PL-Derivat 9 | ++ | + | -- | ++ | ++ |
| 7 | PL-Derivat 10 | + | ++ | - | + | + |
| 8 | PL-Derivat 11 | ++ | ++ | ++ | - | +++ |
| 9 | PL-Derivat 12 | ++ | ++ | ++ | - | ++ |
| 10 | PL-Derivat 13 | ++ | + | + | ++ | +++ |

Zur exakten Bestimmung der Klebrigkeit wurde eine Klebkraft-Prüfung gemäß FINAT-Testmethode Nr. 1 (FINAT TM 1) (siehe FINAT Technisches Handbuch, 7. Ausgabe 2005) durchgeführt.

Mit einem Filmziehgerät der Firma Zehntner wurden hierzu mit den in der Tabelle 2 aufgeführten Klebstoffzusammensetzungen Klebstofffilme mit einem Auftragsgewicht von 18 g/m² auf einer 23 µm PET-Folie hergestellt und gemäß FINAT TM1 untersucht. Die Haftwerte (Haftungen) auf Stahl nach FINAT TM 1 sind in Tabelle 2 angegeben.

**Tabelle 2**

| | | | | | |
|---|---|---|---|---|---|
| Klebstoffzusammensetzung | 1 | 2 | 8 | 9 | 10 |
| Haftung [N/cm] | 0,25 | 1,1 | 3,6 | 2,6 | 2,7 |

Die folgenden Klebstoffzusammensetzungen 11 bis 13 wurden auf einer Meltex Laborbeschichtungsanlage auf eine 23 µm PET Folie mit einem Auftragsgewicht von 25 g/m² beschichtet und die Haftungen nach FINAT TM 1 auf Stahl, HDPE und Karton vermessen. Die Haftungen sind in Tabelle 3 in N/2,5 cm angegeben.

| Klebstoffzusamm. Nr. 11: | | Klebstoffzusamm. Nr. 12: | | Klebstoffzusamm. Nr. 13: | |
|---|---|---|---|---|---|
| Polylactid-Derivat 7 | 25,0% | Polylactid-Derivat 12 | 36,1% | Polylactid-Derivat 12 | 36,1% |
| Novares^{®} TNA 120 | 32,5% | Novares^{®} TNA 120 | 14,4% | Sylvalite^{®} RE 115S | 21,6% |
| Novares^{®}TV 100 | 16,5% | Novares^{®}TV 100 | 7,2% | Dynacoll^{®} Terra¹ | 24,3% |
| Citrofol^{®} BII | 26,0% | Dynacoll^{®} Terra¹ | 24,3% | Pearlbond^{®} Eco 590² | 3,6% |
| Irganox^{®} 1010 | 1,0% | Citrofol^{®} BI³ | 14,4% | Citrofol^{®} BI³ | 14,4% |
| | | Pearlbond^{®}Eco 590² | 3,6% | Irganox^{®} 1010 | 0,4% |
| | | Irganox^{®} 1010 | 0,4% | Irganox^{®} 168⁴ | 0,6% |
| | | Irganox^{®} 168⁴ | 0,6% | | |

| | | | | | |
|---|---|---|---|---|---|
| ¹: Polyesterpolyol ²: thermoplastisches Polyurethan ³: Tributylcitrat ⁴: phosphitisches Alterungsschutzmittel | | | | | |

**Tabelle 3**

| | FTM 1 auf Stahl | FTM 1 auf HDPE | FTM 1 auf Karton |
|---|---|---|---|
| Formulierung A | 6,8 | 5,8 | 4,9 |
| Formulierung B | 14,0 | 4,8 | 5,5 Faserbruch |
| Formulierung C | 14,4 | 12,7 | 4,9 Faserbruch |

## Patentansprüche

1. Klebstoffzusammensetzung, umfassend ein modifiziertes Polylactid, einen Weichmacher und einen Tackifier, **dadurch gekennzeichnet, dass** die Klebstoffzusammensetzung ein Polylactid-Derivat enthält, in dessen Polymerkette ein Anteil an D-2-Hydroxypropionsäuremonomereinheiten 5 bis 45 % und ein Anteil an L-2-Hydroxypropionsäuremonomereinheiten 55 bis 95 %, bezogen auf die gesamte Menge an Hydroxypropionsäuremonomereinheiten, beträgt, wobei die Polymerkette mindestens ein Segment mit 5 bis 100 Hydroxypropionsäuremonomereinheiten aufweist, an dessen Ende oder Enden über eine Estergruppe, Ethergruppe oder Urethangruppe gebunden ein organischer Rest R¹ mit mindestens 3 Kohlenstoffatomen angeordnet ist.

2. Klebstoffzusammensetzung nach Anspruch 1, **dadurch gekennzeichnet, dass** die Klebstoffzusammensetzung das Polylactid-Derivat in einer Menge von 10 bis 50 Gew.-%, bezogen auf die Klebstoffzusammensetzung, enthält.

3. Klebstoffzusammensetzung nach einem der Ansprüche 1 bis 2, **dadurch gekennzeichnet, dass** die Klebstoffzusammensetzung Weichmacher und/oder Tackifier in einer Menge von 50 bis 90 Gew.-%, bezogen auf die Klebstoffzusammensetzung, enthält.

4. Klebstoffzusammensetzung nach einem der Ansprüche 1 bis 3, **dadurch gekennzeichnet, dass** das Gewichtsverhältnis zwischen Weichmacher und Tackifier im Bereich von 0,2 bis 2,5 liegt.

5. Klebstoffzusammensetzung nach einem der Ansprüche 1 bis 4, **dadurch gekennzeichnet, dass** der Weichmacher ein Citronensäurederivat ist.

6. Klebstoffzusammensetzung nach einem der Ansprüche 1 bis 5, **dadurch gekennzeichnet, dass** der Tackifier ein Kohlenwasserstoffharz und/oder ein Polyesterpolyol umfasst.

7. Klebstoffzusammensetzung nach einem der Ansprüche 1 bis 6, **dadurch gekennzeichnet, dass** die Klebstoffzusammensetzung eine Schmelzklebstoffzusammensetzung ist, welche als Schmelze auf ein erstes Substrat aufgetragen werden und eine Verbindung zwischen dem ersten Substrat und einem zweiten Substrat herstellen kann.

8. Klebstoffzusammensetzung nach einem der Ansprüche 1 bis 7, **dadurch gekennzeichnet, dass** die Klebstoffzusammensetzung eine Schmelzhaftklebstoffzusammensetzung ist, welche nach Erhitzen auf ein erstes Substrat aufgetragen werden und eine Verbindung zwischen dem ersten Substrat und einem zweiten Substrat herstellen kann, wobei die Schmelzhaftklebstoffzusammensetzung nach dem Erkalten noch über eine Eigen- und Sofortklebrigkeit verfügt.

9. Klebstoffzusammensetzung nach Anspruch 7 oder 8, **dadurch gekennzeichnet, dass** die Klebstoffzusammensetzung das Polylactid-Derivat in einer Menge von 15 bis 40 Gew.-%, ein Kohlenwasserstoff-Harz als Tackifier in einer Menge von 30 bis 60 Gew.-% und ein Citronensäurederivat als Weichmacher in einer Menge von 20 bis 40 Gew.-%, bezogen auf die Summe dieser Komponenten, enthält.

10. Klebstoffzusammensetzung nach einem der Ansprüche 1 bis 9, **dadurch gekennzeichnet, dass** das Segment 10 bis 50 Hydroxypropionsäuremonomereinheiten umfasst.

11. Klebstoffzusammensetzung nach einem der Ansprüche 1 bis 10, **dadurch gekennzeichnet, dass** das Polylactid-Derivat erhältlich ist durch Umsetzung eines Polylactids mit 5 bis 100 2-Hydroxypropionsäuremonomereinheiten, in dessen Polymerkette ein Anteil an D-2-Hydroxypropionsäuremonomereinheiten 5 bis 45 % und ein Anteil an L-2-Hydroxypropionsäuremonomereinheiten 55 bis 95 %, bezogen auf die gesamte Menge an Hydroxypropionsäuremonomereinheiten, beträgt, zunächst mit einem mindestens zweiwertigen Alkohol mit mindestens drei Kohlenstoffatomen und anschließend mit einem mindestens eine Isocyanatgruppe enthalten Isocyanat.

12. Klebstoffzusammensetzung nach Anspruch 11, **dadurch gekennzeichnet, dass** ein zweiwertiger Alkohol mit drei bis acht Kohlenstoffatomen eingesetzt wird.

13. Klebstoffzusammensetzung nach einem der Ansprüche 1 bis 10, **dadurch gekennzeichnet, dass** das Polylactidsäure-Derivat erhältlich ist durch Umsetzung eines Polylactids mit 5 bis 100 2-Hydroxypropionsäuremonomereinheiten, in dessen Polymerkette ein Anteil an D-2-Hydroxypropionsäuremonomereinheiten 5 bis 45 % und ein Anteil an L-2-Hydroxypropionsäuremonomereinheiten 55 bis 95 %, bezogen auf die gesamte Menge an Hydroxypropionsäuremonomereinheiten, beträgt, mit einem Epoxid mit mindestens drei Kohlenstoffatomen.

14. Verfahren zur Herstellung der Klebstoffzusammensetzung nach einem der Ansprüche 1 bis 12, **dadurch gekennzeichnet, dass** ein Polylactid mit 5 bis 100 Hydroxypropionsäuremonomereinheiten, in dessen Polymerkette ein Anteil an D-2-Hydroxypropionsäuremonomereinheiten 5 bis 45 % und ein Anteil an L-2-Hydroxypropionsäuremonomereinheiten 55 bis 95 %, bezogen auf die gesamte Menge an Hydroxypropionsäuremonomereinheiten, beträgt, entweder
(a) zunächst mit einem mindestens zweiwertigen Alkohol mit mindestens drei Kohlenstoffatomen und anschließend mit einem mindestens eine Isocyanatgruppe enthaltenden Isocyanat umgesetzt wird, oder
(b) mit einem Epoxid mit mindestens drei Kohlenstoffatomen
umgesetzt wird.

15. Verwendung der Klebstoffzusammensetzung gemäß einem der Ansprüche 1 bis 13 als Haftschmelzklebstoff für Etiketten und Klebestreifen oder Klebebänder im Lebensmittel-, Logistik- und Hygienebereich sowie als Schmelz- und/oder Haftschmelzklebstoff im Lebensmittel-, Hygiene-, Automobil-, und Verpackungsbereich.

## Claims

1. An adhesive composition comprising a modified polylactide, a plasticizer and a tackifier, **characterized in that** the adhesive composition contains a polylactide derivative, the polymer chain of which has a D-2-hydroxypropionic acid monomer unit content of from 5 to 45% and L-2-hydroxypropionic acid monomer unit content of from 55 to 95% based on the total amount of hydroxypropionic acid monomer units, the polymer chain comprising at least one segment having from 5 to 100 hydroxypropionic acid monomer units, on the end or ends of which segment an organic group R¹ having at least 3 carbon atoms is arranged in a manner bound by an ester group, ether group or urethane group.

2. The adhesive composition according to claim 1, **characterized in that** the adhesive composition contains the polylactide derivative in an amount of from 10 to 50 wt.% based on the adhesive composition.

3. The adhesive composition according to either claim 1 or claim 2, **characterized in that** the adhesive composition contains a plasticizer and/or tackifier in an amount of from 50 to 90 wt.% based on the adhesive composition.

4. The adhesive composition according to one of claims 1 to 3, **characterized in that** the weight ratio between the plasticizer and the tackifier is in the range of from 0.2 to 2.5.

5. The adhesive composition according to one of claims 1 to 4, **characterized in that** the plasticizer is a citric acid derivative.

6. The adhesive composition according to one of claims 1 to 5, **characterized in that** the tackifier comprises a hydrocarbon resin and/or a polyester polyol.

7. The adhesive composition according to one of claims 1 to 6, **characterized in that** the adhesive composition is a hot-melt adhesive composition which can be applied to a first substrate as a melt and can form a connection between the first substrate and a second substrate.

8. The adhesive composition according to one of claims 1 to 7, **characterized in that** the adhesive composition is a hot-melt adhesive composition which can be applied to a first substrate after being heated and can form a connection between the first substrate and a second substrate, the hot-melt adhesive composition still having inherent and immediate adhesiveness after cooling.

9. The adhesive composition according to either claim 7 or claim 8, **characterized in that** the adhesive composition contains the polylactide derivative in an amount of from 15 to 40 wt.%, a hydrocarbon resin as the tackifier in an amount of from 30 to 60 wt.% and a citric acid derivative as the plasticizer in an amount of from 20 to 40 wt.% based on the sum of these components.

10. The adhesive composition according to one of claims 1 to 9, **characterized in that** the segment comprises from 10 to 50 hydroxypropionic acid monomer units.

11. The adhesive composition according one of claims 1 to 10, **characterized in that** the polylactide derivative can be obtained by reacting a polylactide having from 5 to 100 2-hydroxpropionic acid monomer units, the polymer chain of which polylactide has a D-2-hydroxypropionic acid monomer unit content of from 5 to 45% and a L-2-hydroxypropionic acid monomer unit content of from 55 to 95% based on the total amount of hydroxypropionic acid monomer units, initially with an at least divalent alcohol having at least three carbon atoms and subsequently with an isocyanate containing at least one isocyanate group.

12. The adhesive composition according to claim 11, **characterized in that** a divalent alcohol having from three to eight carbon atoms is used.

13. The adhesive composition according to one of claims 1 to 10, **characterized in that** the polylactic acid derivative can be obtained by reacting a polylactide having from 5 to 100 2-hydroxypropionic acid monomer units, the polymer chain of which polylactide has a D-2-hydroxypropionic acid monomer unit content of from 5 to 45% and a L-2-hydroxypropionic acid monomer unit content of from 55 to 95% based on the total amount of hydroxypropionic acid monomer units, with an epoxide having at least three carbon atoms.

14. A method for preparing the adhesive composition according to one of claims 1 to 12, **characterized in that** a polylactide having from 5 to 100 hydroxypropionic acid monomer units, the polymer chain of which polylactide has a D-2-hydroxypropionic acid monomer unit content of from 5 to 45% and a L-2-hydroxypropionic acid monomer unit content of from 55 to 95% based on the total amount of hydroxypropionic acid monomer units, is either
(a) initially reacted with an at least divalent alcohol having at least three carbon atoms and subsequently reacted with an isocyanate containing at least one isocyanate group, or
(b) reacted with an epoxide having at least three carbon atoms.

15. The use of the adhesive composition according to one of claims 1 to 13 as a pressure-sensitive hot-melt adhesive for labels and adhesive strips or adhesive tapes in the fields of food, logistics and hygiene as well as a hot-melt and/or pressure-sensitive hot-melt adhesive in the fields of food, hygiene, automobiles and packaging.

## Revendications

1. Composition adhésive, comprenant un polylactide modifié, un plastifiant et un tackifiant, **caractérisée en ce que** la composition adhésive contient un dérivé de polylactide, dans la chaîne de polymères duquel une part en motifs monomères d'acide D-2-hydroxypropionique s'élève de 5 à 45 % et une part en motifs monomères d'acide L-2-hydroxypropionique de 55 à 95 %, rapporté à la quantité totale de motifs monomères d'acide hydroxypropionique, la chaîne de polymères présentant au moins un segment comportant 5 à 100 motifs monomères d'acide hydroxypropionique, sur l'extrémité ou les extrémités duquel est disposé un résidu organique R¹ comportant au moins 3 atomes de carbone, relié par un groupe ester, un groupe éther ou un groupe uréthane.

2. Composition adhésive selon la revendication 1, **caractérisée en ce que** la composition adhésive contient le dérivé de polylactide dans une quantité de 10 à 50 % en poids, rapporté à la composition adhésive.

3. Composition adhésive selon l'une quelconque des revendications 1 à 2, **caractérisée en ce que** la composition adhésive contient un plastifiant et/ou un tackifiant dans une quantité de 50 à 90 % en poids, rapporté à la composition adhésive.

4. Composition adhésive selon l'une quelconque des revendications 1 à 3, **caractérisée en ce que** le rapport de poids entre le plastifiant et le tackifiant est compris dans une plage de 0,2 à 2,5.

5. Composition adhésive selon l'une quelconque des revendications 1 à 4, **caractérisée en ce que** le plastifiant est un dérivé d'acide citrique.

6. Composition adhésive selon l'une quelconque des revendications 1 à 5, **caractérisée en ce que** le tackifiant comprend une résine d'hydrocarbure et/ou un polyester-polyol.

7. Composition adhésive selon l'une quelconque des revendications 1 à 6, **caractérisée en ce que** la composition adhésive est une composition adhésive thermofusible, laquelle est appliquée sur un premier substrat sous forme de masse fondue et laquelle permet de constituer une liaison entre le premier substrat et un second substrat.

8. Composition adhésive selon l'une quelconque des revendications 1 à 7, **caractérisée en ce que** la composition adhésive est une composition adhésive de contact fusible, laquelle est appliquée sur un premier substrat après avoir été chauffée et permettant d'établir une liaison entre le premier substrat et un second substrat, la composition adhésive de contact fusible possédant de plus une propriété d'adhérence propre et instantanée.

9. Composition adhésive selon la revendication 7 ou 8, **caractérisée en ce que** la composition adhésive contient le dérivé de polylactide dans une quantité de 15 à 40 % en poids, une résine d'hydrocarbure faisant office de tackifiant dans une quantité de 30 à 60 % en poids et un dérivé d'acide citrique faisant office de plastifiant dans une quantité de 20 à 40 % en poids, rapporté à la somme de ces composants.

10. Composition adhésive selon l'une quelconque des revendications 1 à 9, **caractérisée en ce que** le segment comprend 10 à 50 motifs monomères d'acide hydroxypropionique.

11. Composition adhésive selon l'une quelconque des revendications 1 à 10, **caractérisée en ce que** le dérivé de polylactide s'obtient par transformation d'un polylactide comportant 5 à 100 motifs monomères d'acide 2-hydroxypropionique, dans la chaîne polymère duquel une part en motifs monomères d'acide D-2-hydroxypropionique s'élève de 5 à 45 % et une part en motifs monomères d'acide L-2-hydroxypropionique de 55 à 95 %, rapporté à la quantité totale en motifs monomères d'acide hydroxypropionique, d'abord avec un isocyanate contenant au moins un alcool bivalent comportant au moins trois atomes de carbone, puis avec un isocyanate contenant au moins un groupe isocyanate.

12. Composition adhésive selon la revendication 11, **caractérisée en ce qu'**on utilise un alcool bivalent comportant trois à huit atomes de carbone.

13. Composition adhésive selon l'une quelconque des revendications 1 à 10, **caractérisée en ce que** le dérivé d'acide polylactique s'obtient par transformation d'un polylactide comportant 5 à 100 motifs monomères d'acide 2-hydroxypropionique, dans la chaîne polymère duquel une part en motifs monomères d'acide D-2-hydroxypropionique s'élève de 5 à 45 % et une part en motifs monomères d'acide L-2-hydroxypropionique de 55 à 95 %, rapporté à la quantité totale en motifs monomères d'acide hydroxypropionique, avec un époxyde comportant au moins trois atomes de carbone.

14. Procédé de production de la composition adhésive selon l'une quelconque des revendications 1 à 12, **caractérisé en ce qu'**un polylactide comportant 5 à 100 motifs monomères d'acide hydroxypropionique, dans la chaîne polymère duquel une part en motifs monomères d'acide D-2-hydroxypropionique s'élève de 5 à 45 % et une part en motifs monomères d'acide L-2-hydroxypropionique de 55 à 95 %, rapporté à la quantité totale de motifs monomères d'acide hydroxypropionique, soit
(a) transformé avec un isocyanate contenant au moins un alcool bivalent comportant au moins trois atomes de carbone, puis avec un isocyanate contenant au moins un groupe isocyanate, soit
(b) transformé avec un époxyde comportant au moins trois atomes de carbone.

15. Utilisation de la composition adhésive selon l'une quelconque des revendications 1 à 13 en tant que colle de contact fusible pour étiquettes et rubans adhésifs ou bandes adhésives dans l'industrie alimentaire, le secteur de la logistique et dans le domaine sanitaire, ainsi que sous forme de colle thermofusible et/ou colle de contact fusible dans l'industrie alimentaire, dans le domaine sanitaire, dans l'industrie automobile et dans l'industrie du conditionnement.
